# EUROPÄISCHE PATENTANMELDUNG

(11) **EP 2 730 710 A2**
(43) Veröffentlichungstag der Anmeldung: **14.05.2014**
(21) Anmeldenummer: 13192289.0
(22) Anmeldetag: 11.11.2013
(51) Int. Cl.: E04B 2/74, G01N 29/11, G01M 7/00

(54) **Vorrichtung zur schalltechnischen Prüfung von Bauteilen**

(30) Priorität: 13.11.2012 DE 202012011083 U
(71) Anmelder: IAB - Institut für Angewandte Bauforschung Weimar gGmbH, 99428 Weimar (DE); Akustikbüro Krämer + Stegmaier GmbH, 10553 Berlin (DE)
(72) Erfinder: Palzer, Ulrich, 99428 Weimar (DE); Leydolph, Barbara, 99428 Nohra (DE); Badstübner, Alrik, 08468 Heinsdorfergrund (DE); Stegmaier, Karlheinz, 14089 Berlin (DE); Krummheuer, Hannes, 13159 Berlin (DE)
(74) Vertreter: Geyer, Fehners & Partner

(57) **Zusammenfassung**

Die Erfindung betrifft eine Vorrichtung zur Ermittlung der Luftschalldämmung, umfassend zwei relativ zueinander entlang einer ersten Verschieberichtung verschiebbare Prüfräume (5, 6), die senkrecht zur Verschieberichtung gleiche lichte Öffnungsweiten aufweisen, und eine dazwischen angeordnete erste, mobile Rahmenkonstruktion (2) zum Ein- oder Aufbau von zu prüfenden Prüflingen (1), wobei die erste Verschieberichtung einer Achse entspricht, welche eine von der ersten Rahmenkonstruktion (2) umschlossene Fläche senkrecht durchstößt.

## Beschreibung

### Gebiet der Erfindung

Die Erfindung betrifft eine Vorrichtung zur Ermittlung der Luftschalldämmung an Wänden oder / und deren Teilen (wie zum Beispiel Fenster, Türen, Einbauten) sowie anderen großformatigen Elementen.

Das deutsche Bauordnungsrecht verlangt, dass grundsätzlich für Wohngebäude ein Nachweis über den baulichen Schallschutz zu führen ist. Dieser Nachweis beinhaltet, dass u.a. die einzelnen Schalldämmungen, hier Luft- und Trittschalldämmung, der entsprechend eingesetzten Teilkonstruktionen (Decken, Wände, Fenster, Türen, Fassaden, usw.) bekannt sind und die aus den Teilkonstruktionen zusammengesetzte Gesamtschalldämmung nach anerkannten Rechenverfahren, wie z.B. dem Verfahren nach Beiblatt 1 der DIN 4109, berechnet wird.

Voraussetzung für die Berechnung und planerische Gestaltung jedweder schalltechnischen Situation in Bezug auf die Luft- und Trittschalldämmung ist daher die möglichst genaue Kenntnis der Schalldämmungen der einzelnen Teilkonstruktionen - hier Bauteile genannt. Zur Bestimmung der Schalldämmung einzelner Bauteile werden diese daher standardmäßig in sog. bauakustische Prüfstände verbracht, in denen die Messung Ihrer Schalldämmung möglich ist.

Für die Ermittlung der Luftschalldämmung eines Wandbauteils ist die Schaffung eines Prüfstandes notwendig.

### Stand der Technik

Anforderungen an Prüfstände zur Ermittlung der Luftschalldämmung von Wänden sind in der Norm DIN EN ISO 10140-5 festgelegt. Die DIN EN ISO 10140-5 ersetzt seit Dezember 2010 zusammen mit den übrigen Teilen dieser Normenreiche - DIN EN ISO 10140-1 bis -4 - die Teile -1, -3, -6, -8, -11 und -16 der alten Normenreihe DIN EN ISO 140 vom März 1998 sowie die DIN EN 20140-10 vom September 1992.

Bestehende herkömmliche Schallschutzprüfstände in Deutschland sind als stationäre Bauwerke errichtet, die in der Regel innerhalb von größeren Gebäudehüllen als feste Einbauten installiert sind. Für den Baukörper des Prüfstands kommen in der Regel schwere Mauerwerkswände zum Einsatz, die zum Teil zusätzlich mit Vorsatzschalen versehen sind. Aus historischen Gründen existieren in Deutland eine Vielzahl von Bauformen und Varianten.

Ein Wandprüfstand besteht grundsätzlich aus zwei aneinander grenzenden hallenartigen Prüfräumen, wobei die Volumina der Prüfräume mindestens 50 m³ betragen müssen. Die Volumina und die entsprechenden Abmessungen der beiden Prüfräume sollten nicht gleich groß sein. Es wird ein Unterschied von mindestens 10% für die Volumina und / oder die linearen Abmessungen empfohlen.

Zwischen den Prüfstandsräumen befindet sich eine definierte Prüföffnung, in die der Prüfgegenstand, d.h. das zu prüfende Bauteil - auch als Prüfling bezeichnet - eingebaut wird. Zur Unterdrückung einer Schall-Nebenwegsübertragung über den Baukörper des Prüfstands muss der Bereich der Prüföffnung mindestens einseitig - besser beidseitig - mit einer umlaufenden Trennfuge gegenüber den Prüfräumen versehen sein.

Die herkömmlichen Wandprüfstände weisen erhebliche Nachteile auf, die lange Wartezeiten für die Auftraggeber und hohe Prüfkosten verursachen. Diese Nachteile resultieren aus dem stationären Aufbau des Prüfstandes und der Prüföffnung. Die zu prüfenden Wandbaustoffe - beispielsweise Ziegel, Porenbeton, Kalksandstein, Lehmsteine, Leichtbeton - müssen fest in die Prüföffnung eingebaut werden, d.h. ca. 10 m² Wandfläche müssen aus den entsprechenden Steinen und Mörtel gemauert und ggf. ein- oder beidseitig verputzt werden. Die Prüfung kann erst erfolgen, wenn die Mörtel und Putze vollständig abgebunden haben und die Wand vollständig trocken ist. Die Abbindezeit beträgt in der Regel 2-3 Wochen. Während dieser Zeit ist der Prüfstand blockiert und kann nicht anderweitig genutzt werden. Nach erfolgter Prüfung muss die Wand zurückgebaut und entsorgt werden. Auch dieser Arbeitsschritt ist mit Zeitaufwand verbunden. Aus diesen zeitlichen Limitierungen folgt, dass pro Jahr nicht viel mehr als etwa 10 Wandprüfungen in einem herkömmlichen Prüfstand durchgeführt werden können, woraus die sehr hohen Kosten für die Prüfungen resultieren.

Details zu den einzelnen Normen finden sich u.a. in folgenden Quellen:
[1] DIN Deutsches Institut für Normung e.V.:
   DIN EN ISO 10140-5 - Akustik - Messung der Schalldämmung von Bauteilen im Prüfstand - Teil 5: Anordnungen an Prüfstände und Prüfeinrichtungen
      Berlin: Beuth Verlag GmbH, Dezember 2010
[2] DIN Deutsches Institut für Normung e.V.:
   Normenreihe DIN EN ISO 140 - Akustik - Messung der Schalldämmung in Gebäuden und von Bauteilen
      Berlin: Beuth Verlag GmbH
[3] DIN Deutsches Institut für Normung e.V.:
   Normenreihe DIN EN 20140-10 - Akustik - Messung der Schalldämmung in Gebäuden und von Bauteilen - Teil 10: Messung der Luftschalldämmung kleiner Bauteile und Prüfständen
      Berlin: Beuth Verlag GmbH, September 1992

### Beschreibung der Erfindung

Der Erfindung liegt die Aufgabe zu Grunde, eine Vorrichtung zur Ermittlung der Luftschalldämmung zu entwickeln, welche es ermöglicht, den Durchsatz von Prüflingen - d.h. von zu untersuchenden Bauteilen - zu verkürzen und somit die Kosten für die Prüfungen zu verringern. Dabei müssen alle Anforderungen der DIN EN ISO 10140-5 gewahrt bleiben, damit ein normgerechter Prüfstand entsteht.

Die Lösung dieser Aufgabe erfolgt gemäß den Merkmalen des Anspruchs 1. Eine erfindungsgemäße Vorrichtung zur Ermittlung der Luftschalldämmung besteht aus mindestens zwei entlang einer ersten Verschieberichtung relativ zueinander verschiebbaren Prüfräumen. Beide Prüfräume weisen senkrecht zur ersten Verschieberichtung die gleichen lichten Öffnungsweiten auf, d.h. die Prüföffnungen sind gleich groß. Die Vorrichtung umfasst außerdem mindestens eine erste zwischen den Prüfräumen angeordnete mobile Rahmenkonstruktion - auch als Prüfrahmen bezeichnet - zum Einbau von Bauteilen und / oder großformatigen Elementen, den Prüflingen. Die erste Verschieberichtung entspricht dabei einer Achse, welche eine von der ersten Rahmenkonstruktion umschlossene Fläche, z. B. die Oberfläche einer von der Rahmenkonstruktion eingefassten Wand, senkrecht durchstößt.

Die Prüfräume können also aufeinander und auf den Prüfrahmen zu und voneinander bzw. vom Prüfrahmen weg bewegt werden. Die erste Rahmenkonstruktion ist mobil, d.h. sie kann von ihrem Platz zwischen den Prüfräumen - beispielsweise durch einen Kran und / oder durch ein entsprechendes Rollengestell - entfernt und durch einen anderen Prüfrahmen ersetzt werden.

Ein besonderes Merkmal der erfindungsgemäßen Vorrichtung besteht somit darin, dass die Anzahl der möglichen Prüfungen gegenüber einer herkömmlichen, stationären Konstruktion deutlich erhöht wird. Dies wird durch den Einsatz von mehren mobilen Rahmenkonstruktionen - auch als Prüfrahmen bezeichnet - erreicht, was den Aufbau und die Trocknung der Prüflinge außerhalb des Prüfstands ermöglicht. Der Prüfstand ist während der Abbindezeit bzw. der zum Trocknen benötigten Zeit daher nicht blockiert.

Die Prüfräume bestehen aus einer massiven und / oder massigen Konstruktion, die eine hohe Schalldämmung aufweist. Vorzugsweise können die Prüfräume aus Einzelbauteilen hergestellt werden, wobei die Verbindungsstellen mit für die Anwendung geeigneten dämmenden Materialien, wie beispielsweise Mineralwolle versehen werden. Auch ist es vorteilhaft, eine ineinandergreifende Fugensituation nach dem Nut-Feder-Prinzip auszuführen. Die auf einer identischen, durch die lichten Prüföffnungsabmessungen verlaufenden ersten Verschiebungsachse verschiebbaren Prüfräume weisen in Bewegungsrichtung identische senkrecht verlaufende Querschnittsabmessungen (Breite und Höhe) auf.

Die zueinander verschiebbaren Räume weisen vorteilhaft keine baulichen Verbindungen miteinander auf. Dies wird durch eine geeignete Entkopplung der Auflagerpunkte zu angrenzenden Bauteilen - insbesondere sind hierunter auch solche Bauteile zu verstehen, auf denen die verschiebbaren Prüfräume und der Prüfrahmen gelagert sind bzw. ruhen - erreicht. Hierzu können Luftfedern, Gummimatten, Schwingungsdämpfer oder andere Maßnahmen verwendet werden. Durch diese besondere Ausführung können Körperschallübertragungen vom Sende- in den Empfangsraum ausgeschlossen werden. Auf diese Weise wird eine beidseitige Entkopplung zwischen dem Prüfrahmen und den beiden Prüfräumen erreicht.

Für die Ermittlung der Luftschalldämmung an Wandsystemen wird das Bauteil (Prüfling) in den Prüfrahmen eingebracht, der vorzugsweise ein lichtes Öffnungsmaß besitzt, das dem der Prüfräume entspricht. Das Einbringen des zu prüfenden Wandsystems kann durch Mauern, Kleben, Trocken- oder Nassverlegen, Betonieren, Trockenbaumontage, Ausfachung und / oder Mischbauweisen erfolgen. Das zu prüfende Bauteil kann entsprechend der Anforderungen so konfektioniert werden, dass es verputzt, beschichtet, verkleidet, beklebt, behandelt oder mit vorgehängten, vorgesetzten oder aber auch anderen Schalen versehen werden kann. Ferner kann das zu prüfende Bauteil entsprechend der variablen Prüfrahmenbreite beliebige Dicken aufweisen.

Zur Prüfung wird der Prüfrahmen mit integriertem Bauteil oder mit integrierter Hilfskonstruktion für Fenster, Türen, Durchführungen und / oder andere kleinformatigere Bauteile zwischen den zwei zueinander axial verschiebbaren Prüfräumen so angeordnet, dass die lichten Öffnungen von Sende- und Empfangsraum mit dem Innenmaß des Prüfrahmens axial - d.h. auf der ersten Verschiebeachse - angeordnet sind. Dies kann mit Rollerbahnen, Kranund Schwenkanlagen oder ähnlichem erfolgen. Dichtungen, die zwischen Rahmen und den Räumen angebracht sind, dichten eventuell vorhandene Fugen zwischen den Prüfräumen und dem Prüfrahmen in Prüfposition ab. Ferner dienen diese dazu, eine Nebenwegsübertragung zwischen Sende- und Empfangsraum über den Rahmen zu verhindern.

Die Entkopplung des Rahmens ist ebenfalls, falls erforderlich, auch an den unteren Auflagepunkten vorzusehen, wenn für die Prüfung keine schwebende oder hängende Position gewählt wird. Insgesamt soll die Anordnung des Rahmens so erfolgen, dass keine negative Beeinflussung der Messergebnisse zu erwarten ist. Eine positive Besonderheit dieser Ausführung besteht darin, dass eine beidseitige Entkopplung zwischen dem Prüfrahmen und den beiden Prüfräumen erreicht wird.

Vorteilhaft ist der Prüfrahmen so ausgeführt, dass Resonanzen im Rahmen vermieden werden. Dies kann durch Füllen von Hohlkammerprofilen mittels Sand, Mineralwolle oder anderen Baustoffen oder durch eine geeignete konstruktive Maßnahmen der Rahmenkonstruktion erfolgen.

Ist der Konstruktionsrahmen mit eingebrachtem Bauteil oder eingebauter Hilfskonstruktion axial so angeordnet, dass der Rahmen gegen Körperschalleinkopplung an den Aufstandsflächen geschützt ist, werden die Prüfräume axial - bezogen auf die Verschiebeachse - so zueinander verschoben, dass das Innenmaß ebenfalls axial und parallel angeordnet ist.

Sind die Kammern gegeneinander verschoben und der Rahmen samt Prüfling eingespannt und gedichtet, kann die Prüfung der Luftschallsdämmung durchgeführt werden. Sie erfolgt nach den Vorgaben der Normenreihe DIN EN ISO 10140.

Dabei ist in einer Ausführungsform in der Rahmenkonstruktion eine Wand dauerhaft aufgebaut. In dieser Wand ist mindestens eine definierte Öffnung, in welche Bauteile eingebaut werden können, die kleiner als die Abmessungen der Wand in Breite und Höhe sind. Auf diese Weise wird es beispielsweise möglich, auch Fenster und Türen schalltechnisch zu analysieren. Alternativ oder ergänzend können in die Wand auch Aufnahmen für Treppenstufen, beispielsweise für die Prüfung von Leichtbautreppen, ausgespart und vorbereitet sein. Selbstverständlich ist es für die Prüfung von Treppen auch möglich, eine spezielle Wandkonstruktionen zu verwenden, in denen der Treppenlauf und ggf. auch die Podeste anders, permanent verankert werden.

Die erste Verschieberichtung ist in einer zweckmäßigen Ausgestaltung horizontal ausgerichtet, wodurch das Verschieben der Prüfräume gegeneinander einfach realisiert werden kann, da die Prüfräume nur horizontal gegeneinander verschoben werden müssen.

Um jedoch auch Decken bzw. Deckenelemente prüfen zu können, ist in einer vorteilhaften Alternative die Verschieberichtung vertikal ausgerichtet. In den Prüfrahmen werden dann Decken oder Deckenelemente eingebaut, ähnlich wie Prüfrahmen für Fenster oder Türen können diese auch Öffnungen zum Einsetzen und Prüfen von Oberlichtern oder anderen Deckenelementen umfassen. Auch Flachdachkonstruktionen sind in entsprechenden Prüfrahmen analysierbar. Der Prüfrahmen wird in diesem Fall horizontal ausgerichtet.

Dieser Aufbau kann dann auch zur Analyse des Trittschalls der Decke mit und ohne Deckenauflagen verwendet werden, hier muss dann insbesondere auf die Verbindung der Deckenauflage zum Rahmen geachtet werden. Ohne weitere Modifikation kann dieser Aufbau auch für die Bestimmung des Gehschalls bei Fußböden und Fußbodenauflagen eingesetzt werden. Als Decke wird dann beispielsweise eine massive Standarddecke verwendet.

In einer weiteren Ausgestaltung werden horizontale und vertikale Verschieberichtung kombiniert, indem mindestens drei Prüfräume verwendet werden. Es kommt ein dritter Prüfraum hinzu, welcher entlang einer zweiten Verschieberichtung relativ zu mindestens einem der beiden anderen Prüfräume verschiebbar ist. Der dritte Prüfraum und mindestens einer der beiden anderen Prüfräume weisen senkrecht zur zweiten Verschieberichtung die gleiche lichte Öffnungsweite auf. Dazwischen ist analog eine zweite, mobile Rahmenkonstruktion zum Ein- oder Aufbau von zu prüfenden Bauteilen und / oder großformatigen Elementen angeordnet. Die zweite Verschieberichtung entspricht dabei einer Achse, welche eine von der zweiten Rahmenkonstruktion umschlossene Fläche senkrecht durchstößt, Dabei stehen die erste Verschiebeachse und die zweite Verschiebeachse senkrecht aufeinander.

Dies ist mit einer entsprechenden Modularbauweise leicht realisierbar: Werden die Prüfräume aus Wand- und Decken- bzw. Bodenmodulen zusammengesetzt, so lassen sie sich in beliebiger Richtung kombinieren, indem die entsprechenden Module, an deren Stelle zwischen zwei Prüfräumen der Prüfrahmen treten soll, entfernt werden. Die Module sind lösbar miteinander verbunden, sie können in Fertigteilbauweise gefertigt werden.

In einer alternativen Ausgestaltung ist die Vorrichtung nicht für die Prüfung von Wänden oder Decken zwischen zwei Räumen ausgelegt, sondern für die Untersuchung von flankierenden Bauteilen, also solchen Bauteilen, die die beiden Räume seitlich verbinden. Dazu sind zwei Prüfräume vorgesehen, welche nicht zwingend gegeneinander verschiebbar sein müssen. Wichtig ist, dass sie schalltechnisch voneinander getrennt sind, indem beispielsweise eine gemeinsame Zwischenwand eine möglichst hohe Schalldämmung aufweist. Auch müssen die beiden Prüfräume nicht über eine gemeinsame Zwischenwand verfügen. An einer gemeinsamen Seite sind beide Prüfräume offen, die Öffnungen der beiden Räume zeigen also in die gleiche Richtung. Diese seitlichen Öffnungen werden dann über einen Prüfrahmen verbunden, der das Flankenbauteil aufnimmt. Dabei kann der Prüfrahmen aus zwei nicht miteinander verbundenen Teilen bestehen, so dass eine Verbindung nur über das Bauteil hergestellt wird. Dies verbessert die notwendige schalltechnische Entkopplung, da für die Messung nur die Schall-Längsleitung über das flankierende Bauteil maßgeblich sein darf. Ist der Prüfrahmen geschlossen, so ist er vorzugsweise mit einer hochschalldämmenden Trennwand ausgefacht.

Die vorangehend beschriebene Modulbauweise eignet sich ebenso hervorragend für die Prüfung von Flankenbauteilen, welche also die Prüfräume auf einer Seite verbinden: Hierzu wird von jedem Prüfraum eine Seitenwand entfernt, die bisherigen Öffnungen werden entweder durch eine oder durch zwei Wände verschlossen. Bei entsprechenden Abmessungen können die zuvor auf der Seite entfernten Seitenwände dort eingesetzt werden.

Alternativ oder in Ergänzung können die Prüfräume auch rotierbar gelagert sein, so dass sie erst auseinander geschoben und dann gedreht werden können, so dass die zunächst aufeinander zu weisenden Öffnungen nun nebeneinander liegen und in dieselbe Richtung weisen. Entlang der offenen Seiten wird das zu prüfende Element dann in einem Prüfrahmen als flankierendes Bauteil zwischen den beiden Räumen eingebaut.

Dabei reicht es hier wie in den anderen Ausgestaltungen prinzipiell aus, wenn nur einer der beiden Räume verschiebbar ist, da es auf die Relativverschiebung ankommt. Auch ist es zur Untersuchung flankierender Bauteil möglich, die gleichen Öffnungen wie für die Prüfung von Zwischenwänden zu verwenden, wenn die beiden Prüfräume seitlich gegeneinander verschoben werden, also senkrecht zur ersten Verschieberichtung. Der Prüfrahmen mit dem Flankenbauteil wird dann zwischen die beiden Prüfräume gesetzt, wobei sich beide Prüfräume dann auf verschiedenen Seiten des Flankenbauteils befinden, jedoch längs des Flankenbauteils um mindestens eine Raumbreite versetzt.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Vorrichtung zur Ermittlung der Luftschalldämmung mit zwei Prüfräumen in geöffnetem Zustand,
- Fig. 2: dieselbe Vorrichtung im geschlossenen Zustand,
- Fig. 3: einen Schnitt entlang einer Verschiebeachse durch einen Prüfraum, und
- Fig. 4 a) - f): verschiedene Realisierungen von Querschnitten der Rahmenkonstruktion zur Aufnahme verschiedene Prüflinge.

### Ausführliche Beschreibung der Zeichnungen

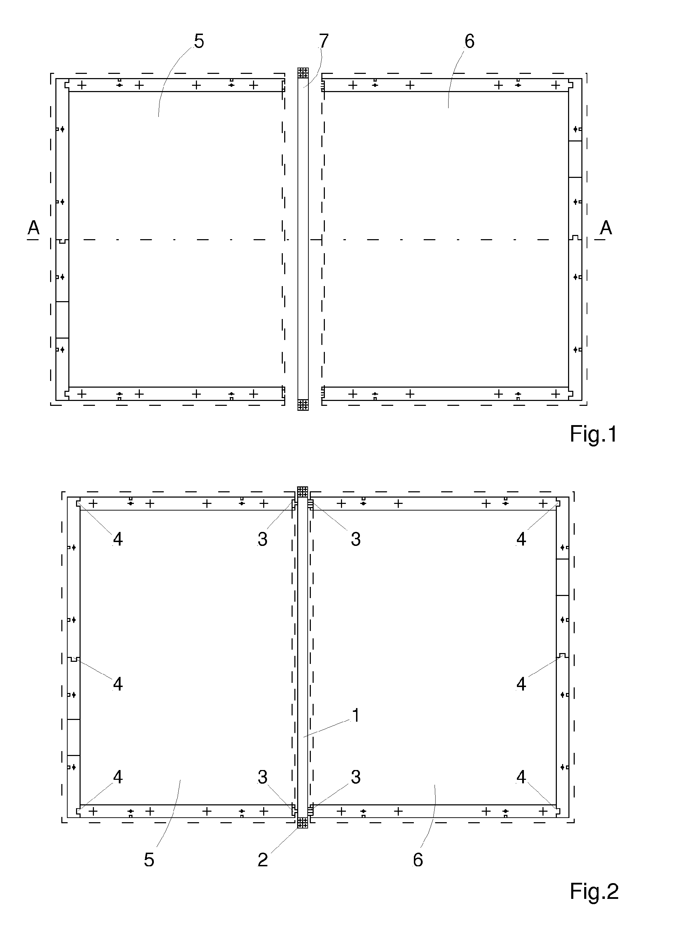

In Fig. 1 ist der Grundriss zweier Prüfräume 5 und 6 in geöffnetem Zustand dargestellt. Beide Prüfräume 5 und 6 sind so axial entlang einer ersten Verschieberichtung, d.h. entlang einer hier mit A-A gekennzeichneten Verschiebeachse, voneinander verschoben, dass sich eine spaltähnliche Öffnung dazwischen ergibt. Senkrecht zur Verschieberichtung weisen die Prüfräume die gleichen lichten Öffnungsweiten auf. In die spaltähnliche Öffnung kann ein in eine Rahmenkonstruktion 2 eingebauter Prüfling 1 mittels Kran, Rollenbahn, Transportwagen oder ähnlichen Hilfsmitteln zwischen die Prüfräume 5 und 6 bewegt oder befördert werden. Die Endlage bzw. die Prüfposition ist erreicht, wenn die Innenmaße der Rahmenkonstruktion 2 mit denen der Prüfräume 5, 6 axial in Verschieberichtung angeordnet sind, d.h. sich decken. Der Prüfling 1 kann eine geschlossen Wand oder Decke sein, aber auch Wände mit Öffnungen, in die eine Tür und / oder ein Fenster eingesetzt sind, lassen sich als Prüfling 1 einsetzen, wenn die Eigenschaften der Fenster oder Türen untersucht werden sollen. Analog lassen sich auch Wände mit Treppen prüfen, Decken mit und ohne Oberlichtern, Fußböden mit Belag, etc., allg. Bauteile oder großformatige Elemente.

In Fig. 2 ist der Grundriss beider Prüfräume 5 und 6 in axialer Endlage nach linearer Verschiebung der beiden Prüfräume 5 und 6 entlang der Verschiebeachse A-A aufeinander zu sowie mit eingespannter und entkoppelter Rahmenkonstruktion 2, auch als Prüfrahmen bezeichnet, dargestellt. Im Prüfrahmen ist der Prüfling 1 dargestellt. Zur akustischen Dichtung und zur Vermeidung von Schallenergieverlusten ist zwischen Rahmenkonstruktion 2 und Prüfraum 5 sowie Prüfraum 6 eine in beispielhaftem Nut-Feder-System 4 ausgeführte umlaufende Dichtung angeordnet. Wird die erfindungsgemäße Vorrichtung in Fertigteilbauweise errichtet, so wird zwischen den einzelnen Fertigteilen eine weitere Dichtung, welche als Nut-Feder-System 4 ausgeführt ist, zur Verhinderung des Verlustes von Schallenergie eingesetzt.

In diesem Beispiel ist eine Ausführungsvariante dargestellt, bei der das Bauteil oder die Hilfskonstruktion über das lichte Maß der Prüfräume 5 und 6 hinausragt. Dabei wird die zur Schalldichtigkeit der Prüfräume 5 und 6 notwendige Dichtung 3 direkt an das Bauteil, d.h. den Prüfling 1, oder die Hilfskonstruktion gepresst. Dies hat den Vorteil, dass die physikalischen und akustischen Einflüsse der Rahmenkonstruktion 2 die Ergebnisse der Ermittlung der Luftschalldämmung nicht maßgebend beeinflussen können.

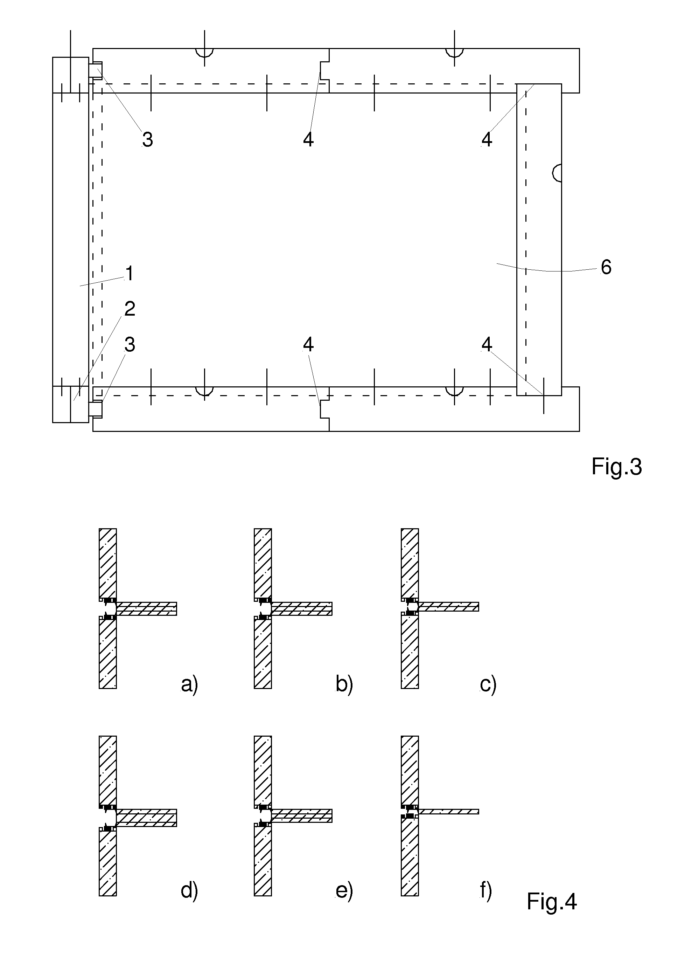

Fig. 3 zeigt einen Schnitt entlang der Verschiebeachse (A-A) durch nur einen Prüfraum, hier den Prüfraum 6 mit an die umlaufende Dichtung 3 angepresster Rahmenkonstruktion 2 und eingebautem Prüfling 1. Der Prüfrahmen besitzt ein mit dem dargestellten Prüfraum 6 identisches lichtes Öffnungsmaß, so dass nur der Prüfling 1, d.h. das Bauteil bzw. eine Hilfskonstruktion mit Einbauteil dem Schallfeld ausgesetzt ist, die Rahmenkonstruktion 2 jedoch nicht.

Fig. 4 stellt in den Zeichnungen a) bis f) mögliche Rahmenquerschnitte dar, die zur Aufnahme verschiedener Bauelemente mit verschiedenen Wandkonstruktionsstärken, den Prüflingen 1, eingesetzt werden können. Somit kann die Rahmenkonstruktion 2 auf verschiedene Bauteilstärken und auch für mehrschalige Systeme angepasst und somit auch eine breite Universalrahmenkonstruktion für alle Bauteile oder Hilfskonstruktionen verwendet werden. Die dargestellte Dichtung 3 kann zentrisch in der Prüfkammerwandebene angeordnet werden. Empfehlenswert ist allerdings, dass eine zusätzliche Dichtung an den inneren Flankenpunkten der Schallkammern positioniert wird.

### Bezugszeichenliste

- 1: Prüfling
- 2: erste Rahmenkonstruktion
- 3: Dichtung
- 4: Nut-Feder-System
- 5: Prüfraum
- 6: Prüfraum
- A-A: Verschiebeachse

## Patentansprüche

1. Vorrichtung zur Ermittlung der Luftschalldämmung, umfassend zwei relativ zueinander entlang einer ersten Verschieberichtung verschiebbare Prüfräume (5, 6), die senkrecht zur Verschieberichtung gleiche lichte Öffnungsweiten aufweisen, und eine dazwischen angeordnete erste, mobile Rahmenkonstruktion (2), zum Ein- oder Aufbau von zu prüfenden Prüflingen (1), wobei die erste Verschieberichtung einer Achse entspricht, welche eine von der ersten Rahmenkonstruktion (2) umschlossene Fläche senkrecht durchstößt.

2. Vorrichtung nach Anspruch 1, **dadurch gekennzeichnet, dass** die Prüfräume (5, 6) gegen Übertragung von Körperschall über die Flankenwege durch Entkopplung der Auflagerpunkte zu angrenzenden Bauteilen geschützt sind.

3. Vorrichtung nach Anspruch 1 oder 2, **dadurch gekennzeichnet, dass** die Prüfräume (5, 6) mittels hydraulischen Zylindern, Seilzugsystemen oder anderen Verschiebeinrichtungen axial entlang der ersten Verschieberichtung bewegbar sind.

4. Vorrichtung nach einem der Ansprüche 1 bis 3, **dadurch gekennzeichnet, dass** in der ersten Rahmenkonstruktion (2) eine Wand dauerhaft aufgebaut ist, mit einer definierten Öffnung zum Einbau von Bauteilen mit geringeren Maßen, bevorzugt von Fenstern oder Türen, und / oder mit Öffnungen zur Aufnahme von Treppenstufen.

5. Vorrichtung nach einem der Ansprüche 1 bis 4, **dadurch gekennzeichnet, dass** die erste Verschieberichtung horizontal ausgerichtet ist.

6. Vorrichtung nach einem der Ansprüche 1 bis 4, **dadurch gekennzeichnet, dass** die erste Verschieberichtung vertikal ausgerichtet ist.

7. Vorrichtung nach einem der Ansprüche 1 bis 6, umfassend einen dritten Prüfraum, welcher entlang einer zweiten Verschieberichtung relativ zu mindestens einem der beiden anderen Prüfräumen (5, 6) verschiebbar ist, und wobei der dritte Prüfraum und mindestens einer der beiden anderen Prüfräume (5, 6) senkrecht zur zweiten Verschieberichtung die gleiche lichte Öffnungsweite aufweisen und dazwischen eine zweite, mobile Rahmenkonstruktion angeordnet ist, zum Ein- oder Aufbau von Prüflingen, wobei die zweite Verschieberichtung einer Achse entspricht, welche eine von der zweiten Rahmenkonstruktion umschlossene Fläche senkrecht durchstößt, und wobei die erste Verschiebeachse und die zweite Verschiebeachse senkrecht aufeinander stehen.

8. Vorrichtung zur Ermittlung der Luftschalldämmung, umfassend zwei schalltechnisch voneinander getrennte Prüfräume, die zu einer gemeinsamen Seite parallel zur Verschieberichtung die gleiche lichte Öffnungsweite aufweisen und ansonsten geschlossen sind, und an dieser Seite eine erste, die Prüfräume abschließende, mobile Rahmenkonstruktion zum Ein- oder Aufbau von zu prüfenden Bauteilen und / oder großformatigen Elementen angeordnet ist.

9. Vorrichtung nach einem der Ansprüche 1 bis 8, **dadurch gekennzeichnet, dass** die mindestens zwei Prüfräume jeweils um eine Achse senkrecht zur Verschieberichtung rotierbar gelagert sind.

10. Vorrichtung nach einem der Ansprüche 1 bis 9, **dadurch gekennzeichnet, dass** die Prüfräume (5, 6) und / oder die Rahmenkonstruktion (2) als konfigurierbare Module aus einzelnen, gleichartigen Modulen zusammengesetzt sind, und die Module lösbar miteinander verbunden sind.
